# EUROPÄISCHE PATENTSCHRIFT

(11) **EP 4 464 890 B1**
(45) Veröffentlichungstag und Bekanntmachung des Hinweises auf die Patenterteilung: **04.02.2026**
(21) Anmeldenummer: 23207264.5
(22) Anmeldetag: 01.11.2023
(51) Int. Cl.: F03D 3/00, F03D 3/02, F03D 3/06, F03D 7/06

(54) **WINDKRAFTGENERATOR MIT VERTIKALER ACHSE MIT INTELLIGENTER STEUERUNG DES ANSTELLWINKELS DER ROTORBLÄTTER**
VERTICAL AXIS WIND ENERGY GENERATOR WITH INTELLIGENT CONTROL OF BLADE ANGLE OF ATTACK
GÉNÉRATEUR D'ÉNERGIE ÉOLIENNE À AXE VERTICAL AVEC CONTRÔLE INTELLIGENT DE L'ANGLE D'ATTAQUE DES PALES

(30) Priorität: 19.05.2023 DE 202023001102 U
(43) Veröffentlichungstag der Anmeldung: 20.11.2024
(73) Patentinhaber: monumentum global GmbH, 13437 Berlin (DE)
(72) Erfinder: Pauk, Andrey, 13469 Berlin (DE)
(74) Vertreter: Adares PartGmbB

(56) Entgegenhaltungen:
- DE-U1- 202023 001 102

## Beschreibung

Die Erfindung betrifft das Gebiet vertikaler Windkraftgeneratoren mit intelligenter Steuerung des Anstellwinkels der Rotorblätter zur Erzielung maximaler Effizienz (Winkelgrad) der Stromerzeugung und zur Erreichung der minimalen Windlast am Windgenerator.

### Gebiet der Erfindung: Alternative Energie

### Voraussetzungen für die Erstellung einer Erfindung:

Der heutige Stand horizontaler Windkraftanlagen ist durch folgende Merkmale gekennzeichnet:
- eine große Anzahl der Anlagen des gleichen Typs
- Anlagen mit Startleistung ab 100 kW
- Anlagen sind laut, vibrieren, schaden der Population von Vögeln, Kleintieren und Insekten; Errichtung in der Nähe von Ortschaften ist nicht möglich
- sehr hohe Baukosten
- Lebenszyklus der Anlage ca. 10 Jahre
- Probleme der Produktion, Logistik und Entsorgung von Rotorblättern

Der heutige Stand vertikaler Windkraftanlagen ist heute durch folgende Merkmale gekennzeichnet:
- geringe Leistung
- geringer Wirkungsgrad
- großer Wind bei Start
- keine Möglichkeiten für Errichtung der Anlagen innerhalb der Stadt, und/oder keine Lösungen für mobile Anwendungen
- hohe Windlast
- Notwendigkeit der Energiefreisetzung (Entsorgung)

Stand der Technik ist zum Beispiel offenbart in US 2019186461 A1, US 6379115 B1, WO 2011153945 A1, US 2008175709 A1 und US 8410622 B1.

Die unten beschriebene Erfindung ermöglicht die Beschleunigung des Übergangs zu einer alternativen Winderzeugung zu geringeren Kosten und ermöglicht ebenfalls die Anwendung dieser innovativen Erfindung im kleinen Energiesektor, auch für Haushalte.

### Kurze Beschreibung der Erfindung:

Die Erfindung betrifft eine vertikale Windkraftanlage gemäß Anspruch 1. Vorteilhafte Ausgestaltungen sind in den Unteransprüchen definiert.

Die Verwendung intelligenten Steuerungssystems für den Anstellwinkel der Rotorblätter eines vertikalen Windgenerators ermöglicht maximale Effizienz durch die konstante Messung der Richtung und Geschwindigkeit des Luftstroms sowie durch den Einsatz von Motoren an der Achse der Rotorblätter. Aufgrund dieses Prinzips ist es möglich, eine Verdoppelung des Wirkungsgrads zu erreichen und die Kosten für die Installation von Windkraftanlagen erheblich zu reduzieren. Diese Lösung ermöglicht den Einsatz solcher Windkraftanlagen im kleinen alternativen Energiesektor. Diese Innovation ermöglicht den Bau von Systemen innerhalb der Stadt mit einer Startleistung von 500 Watt. Die innovativen Anlagen sind praktisch frei von Mängeln horizontaler Windkraftanlagen, d.h. der Lärm von ihnen übersteigt nicht den Lärm des natürlichen Windes, es gibt keine Vibrationen von den innovativen Anlagen, sie schaden nicht der Umwelt, den Vögeln und den Insekten; es ist ebenfalls möglich, diese Anlagen im Wassertransport einzusetzen, sowie in mobilen Anwendungen. Die Windlast dieser Lösung ist 2-3 Mal geringer als bei bekannten Designs und Lösungen, was bedeutet, dass die Installationskosten um ein Vielfaches geringer sind. Angesichts dessen, ist die Platzierung innerhalb der Stadt, auf Dächern, Balkonen, auf Wasserfahrzeugen und mobilen Anlagen zulässig.

### Beschriftungen der Abbildungen

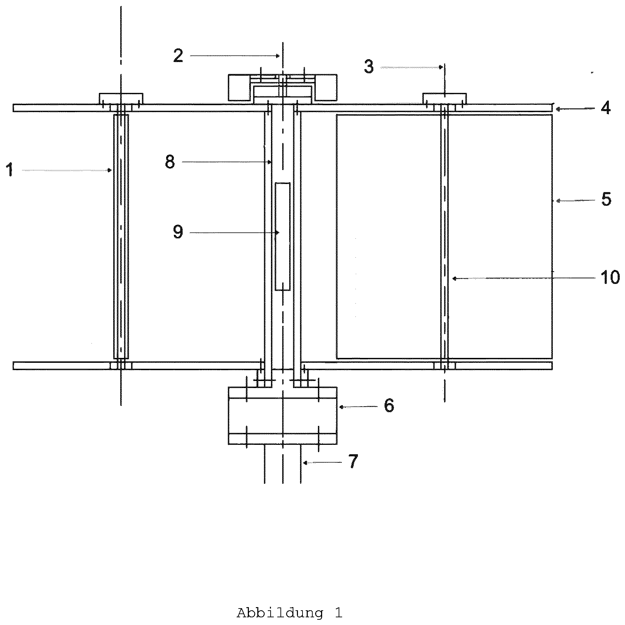

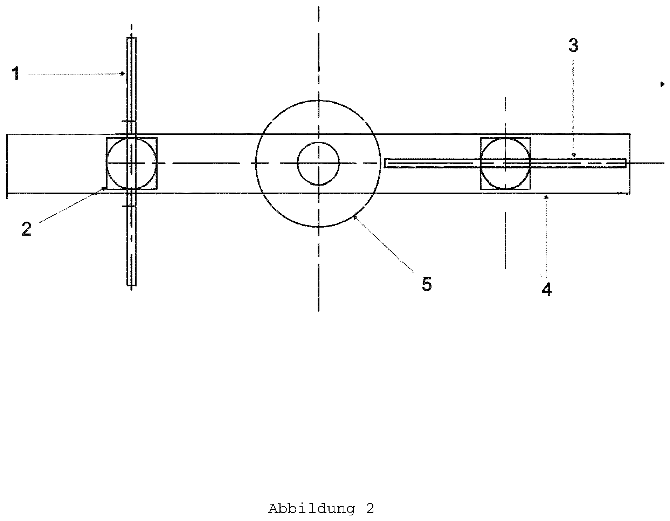

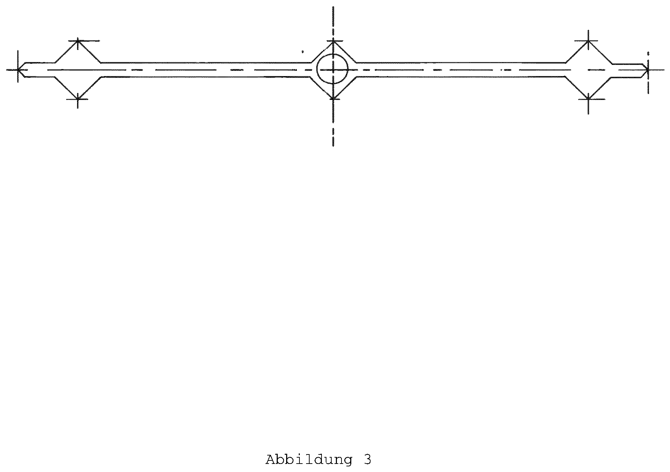

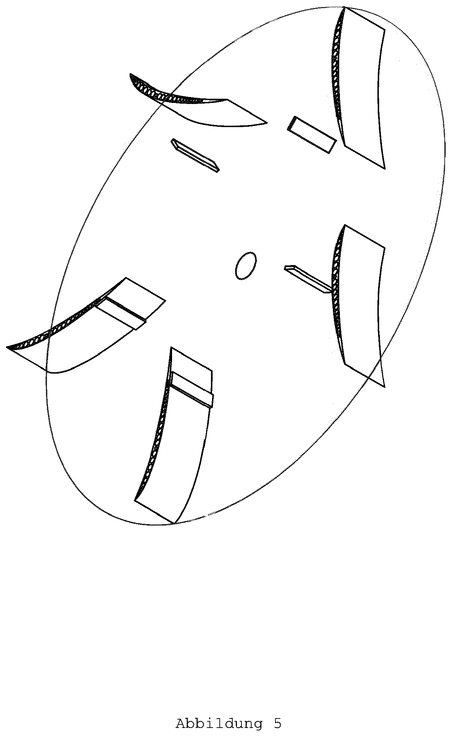

Abbildung 1 - "Vorderansicht der Erfindung"
   1 - Rotorblatt in Position entlang der Strömung
   2 - Miniturbine mit einem Durchflusssensor, mit einem Strömungsgeschwindigkeitssensor und einem Generator zur Sicherstellung des Betriebes des Mikroprozessoren und der Aktoren - Schrittmotoren
   3 - Motor zur Bewegung der Rotorblätter
   4 - Befestigungsstange der Rotorblätter
   5 - Rotorblatt in Position quer zur Strömung
   6 - Stromgenerator
   7 - Befestigungsmast für Windturbinen
   8 - Befestigungsmast für Rotorblätter
   9 - Mikrocomputer und Steuerschaltungen
   10 - Rotationsachse der Rotorblätter
Abbildung 2 - "Draufsicht auf die Erfindung"
   1 - Rotorblatt in Position entlang der Strömung
   2 - Motor zur Bewegung der Rotorblätter
   3 - Rotorblatt in Position quer zur Strömung
   4 - Befestigungsstange der Rotorblätter
   5 - Miniturbine
Abbildung 3 - "Profil des Rotorblattes"

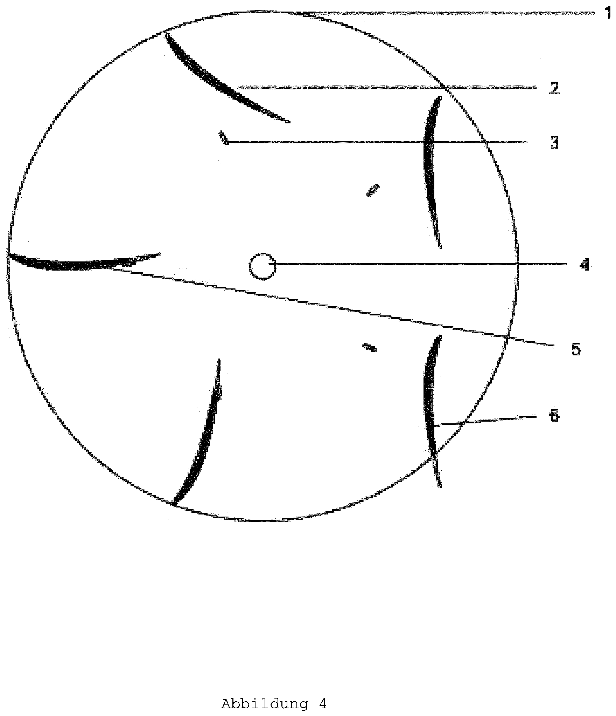

Abbildung 4 - "Schematische Darstellung der Miniturbine", Draufsicht
   1 - Befestigungsplatte der Rotorblätter - oberer und unterer Teil
   2 - Drehachse des Rotorblattes
   3 - Magnetische Anschläge, Eckbefestigungen der Drehung
   4 - Drehachse
   5 - Rotorblatt in Gegenstromposition
   6 - Rotorblatt in Durchflussposition
Abbildung 5 - "Schematische Darstellung der Miniturbine", Draufsicht, 3D

## Patentansprüche

1. Vertikale Windkraftanlage zur Stromerzeugung, aufweisend Rotorblätter (1a, 1b, 3b, 5a) und einen Mikroprozessor, welcher mittels eines Algorithmus die Rotorblätter steuert, wodurch die Rotorblätter eine effizienteste Position in Bezug auf die entgegenkommende Windströmung in der Erzeugungszone einnehmen, oder die Position des minimalen Strömungswiderstands in der Zone einnehmen der Rückwärtsbewegung der Rotorblätter, wobei bei Starkwind und Leerlauf des Hauptgenerators (6a) die Rotorblätter entlang der Windströmung ausgerichtet werden, um einen minimalen Strömungswiderstand zu erzeugen, und dementsprechend eine minimale Windlast auf die Windkraftanlage erzeugt wird, die vertikale Windkraftanlage weiter aufweisend eine separate Miniturbine (2a, 5b) mit beweglichen Schaufeln (5, 6) an einer Magnetaufhängung, zur Stromversorgung des Mikroprozessors und eines oder der Motoren zur Steuerung der Position der Rotorblätter, um Daten in Echtzeit zur Strömung, Geschwindigkeit und Richtung und Erzeugung einer Mindestspannung zu erhalten.

2. Windkraftanlage gemäß Anspruch 1, derart ausgebildet, dass im Prozess der Stromerzeugung jedes Rotorblatt vorbereitet ist, einen vollen Kreis um die eigene Achse zu machen, wobei ein Positionswinkel in Bezug auf die Strömung durch den Mikroprozessor bestimmt wird basierend auf: Daten der Geschwindigkeit und der Richtung der Strömung, Daten über den Betrieb des Hauptgenerators, Notfallsituationen, Drehmoment an der Generatorwelle, Vibrationsdaten der Anlage und anderen Telemetrieparameter der gesamten Anlage.

3. Windkraftanlage gemäß Anspruch 1 oder 2, wobei die Miniturbine eine Messturbine der hohen Rotationsgeschwindigkeit ist, welche zur Stromversorgung eines Mikrocomputers mit einem Mikrocontroller dient, um die Durchflussrate und die Strömungsrichtung genau zu bestimmen, wobei die Miniturbine sich in einer Linie mit der Hauptturbine befindet, wobei die Miniturbine 3 bis 10 Prozent der Höhe der Hauptturbine beträgt, die Drehrichtung der Miniturbine immer gegen die Richtung der Hauptturbine ist, die Anzahl der Rotorblätter von 2 bis 10 beträgt, die Rotorblätter der Miniturbine auf beweglichen Achsen montiert sind und sich um eine Achse in einem Winkel von 45 bis 270 Grad drehen, wobei an den Kanten der Rotorblätter sich kleine Magnete befinden, und in Anschlägen, gegenüber den an den Rotorblättern verbauten Magneten, Magnete mit einem gleichnamigen Pol angebracht sind, um einen Effekt einer verschleißfreien Dämpfungswirkung zu gewährleisten, wobei der Magnet an dem jeweiligen Rotorblatt der Miniturbine einen Detektor für Sensoren darstellt, der den Ablenkwinkel eines bestimmten Rotorblattes anzeigt, und wobei der Schwerpunkt eines solchen Rotorblattes in der Mitte der Drehachse des Rotorblattes liegt.

4. Windkraftanlage gemäß einem der vorangehenden Ansprüche, aufweisend 1, 2, 3, 4, 5 oder mehr Platzierungssegmente der Rotorblätter, wobei die Anzahl der Rotorblätter pro Platzierungssegment 1, 2, 3 oder mehr beträgt, so dass eine Leistungssteigerung durch einfache Skalierbarkeit des Systems ermöglicht ist.

5. Windkraftanlage gemäß einem der vorangehenden Ansprüche, wobei eine Baueinheit, die den Mikroprozessor enthält, sich in der Rotationsebene oben, unten oder in der Mitte befindet oder ein Mikroprozessor, eine Miniturbine mit einem Durchflusssensor und einem Steuermotor im Inneren des Rotorblattes platziert ist.

## Claims

1. A vertical wind turbine generator unit for power generation, comprising rotor blades (1a, 1b, 3b, 5a) and a microprocessor which, by means of an algorithm, controls the rotor blades, whereby the rotor blades occupy the most efficient position with respect to the oncoming wind flow in the generation zone, or occupy the position of the minimum flow resistance in the zone of the backward movement of the rotor blades, wherein in case of strong wind and idling of the main generator (6a), the rotor blades are moving along the wind flow in order to generate minimum flow resistance, and accordingly a minimum wind load is generated on the wind turbine generator unit, the vertical wind turbine generator unit further comprising a separate mini-turbine (2a, 5) having movable blades (5, 6) on a magnetic suspension, for powering the microprocessor and a or the motors for controlling the position of the rotor blades to obtain data in real-time on flow, velocity and direction and generation of a minimum voltage.

2. The wind turbine generator unit according to claim 1, designed in such a way that in the process of power generation each rotor blade is prepared to make a full circle around its own axis, wherein a position angle with respect to the flow is determined by the microprocessor on the basis of: data of the velocity and the direction of the flow, data on the operation of the main generator, emergency situations, torque at the generator shaft, vibration data of the unit and other telemetry parameters of the entire unit.

3. The wind turbine generator unit according to claim 1 or 2, wherein the mini-turbine is a measuring turbine of the high rotational speed, which serves for powering a microcomputer with a microcontroller in order to accurately determine the flow rate and the direction of flow, wherein the mini-turbine is located in line with the main turbine, wherein the mini-turbine is 3 to 10 percent of the height of the main turbine, the direction of rotation of the mini-turbine is always against the direction of the main turbine, the number of rotor blades is from 2 to 10, the rotor blades of the mini turbine are mounted on movable axes and rotate around an axis at an angle of 45 to 270 degrees, wherein small magnets are located on the edges of the rotor blades, and magnets having the pole of the same name are attached in stops opposite the magnets installed on the rotor blades to ensure an effect of wear-free damping impact, wherein the magnet on the respective rotor blade of the mini turbine is a detector for sensors indicating the deflection angle of a given rotor blade, and wherein the center of gravity of such a rotor blade is in the middle of the rotation axis of the rotor blade.

4. The wind turbine generator unit according to any of the preceding claims, having 1, 2, 3, 4, 5 or more placement segments of the rotor blades, wherein the number of rotor blades per placement segment is 1, 2, 3 or more, so that an increase in performance is possible by simple scalability of the system.

5. The wind turbine generator unit according to any of the preceding claims, wherein a component containing the microprocessor is located in the rotation plane at the top, bottom or in the middle or a microprocessor, a mini-turbine having a flow sensor and a control motor is placed inside the rotor blade.

## Revendications

1. Une éolienne verticale pour la production d'électricité, comprenant des pales de rotor (1a, 1b, 3b, 5) et un microprocesseur qui, au moyen d'un algorithme, contrôle les pales de rotor, dans laquelle les pales de rotor occupent une place la plus efficace par rapport au flux de vent de rencontre dans la zone de production, ou occupent la position de résistance minimale de l'écoulement dans la zone de mouvement arrière des pales de rotor, dans laquelle en cas de vent fort et d'un ralenti du générateur principal (6a), les pales de rotor se déplacent selon le flux du vent afin de générer une résistance minimale à l'écoulement, et en conséquence, une charge de vent minimale est générée sur l'éolienne, l'éolienne verticale comprenant en outre une mini-turbine séparée (2a, 5) avec des pales mobiles (5, 6) sur une suspension magnétique, pour alimenter le microprocesseur et un ou les moteurs pour contrôler la position des pales de rotor afin d'obtenir des données en temps réel sur le flux, la vitesse et la direction et la génération d'une tension minimale .

2. L'éolienne, selon la revendication 1, conçue de manière à ce que, lors de la production d'énergie, chaque pale de rotor est préparée de faire un cercle complet autour de son propre axe, dans laquelle un angle de position par rapport au flux est déterminé par le microprocesseur sur la base : des données de vitesse et de direction du flux, des données sur le fonctionnement du générateur principal, des situations d'urgence, du couple au niveau de l'arbre du générateur, des vibrations de l'installation et d'autres paramètres de télémétrie de l'ensemble de l'installation.

3. L'éolienne, selon la revendication 1 ou 2, dans laquelle la mini-turbine est une turbine de mesure à grande vitesse de rotation, utilisée pour alimenter un micro-ordinateur ayant un microcontrôleur afin de déterminer avec précision le débit et la direction de l'écoulement, dans laquelle la mini-turbine est alignée avec la turbine principale, dans laquelle la mini-turbine mesure de 3 à 10 % de la hauteur de la turbine principale, la direction de rotation de la mini-turbine est toujours en sens inverse de la direction de la turbine principale, le nombre de pales de rotor est de 2 à 10, les pales de rotor de la mini-turbine sont montées sur des axes mobiles et tournent autour d'un axe à un angle de 45 à 270 degrés, dans laquelle des petits aimants sont situés sur les bords des pales de rotor et des aimants ayant un pôle du même nom sont attachés dans des arrêts opposés aux aimants installés sur les pales de rotor pour garantir un effet d'un effet d'amortissement sans use, dans laquelle l'aimant sur la pale respective de rotor de la mini-turbine présente un détecteur pour capteurs indiquant l'angle de déviation d'une pale donnée de rotor, et dans laquelle le centre de gravité d'une telle pale de rotor se trouve au centre de l'axe de rotation de la pale de rotor.

4. L'éolienne, selon l'une des revendications précédentes, comportant 1, 2, 3, 4, 5 segments ou plus de pales de rotor, dans laquelle le nombre de pales de rotor par segment de placement est 1, 2, 3 ou plus, de sorte qu'une augmentation des performances est possible par la simple scalabilité du système.

5. L'éolienne selon l'une des revendications précédentes, dans laquelle un composant contenant le microprocesseur est situé dans le plan de rotation en haut, en bas ou au centre, ou un microprocesseur, une mini-turbine avec un capteur de débit et un moteur de commande est placée à l'intérieur de la pale de rotor.
